# EUROPEAN PATENT APPLICATION

(11) **EP 4 290 317 A1**
(43) Date of publication of application: **13.12.2023**
(21) Application number: 22745934.4
(22) Date of filing: 26.01.2022
(51) Int. Cl.: G04F 10/00, G08C 15/06, H04N 5/222

(54) **PROGRAM, INFORMATION PROCESSING METHOD, AND TERMINAL DEVICE**

(30) Priority: 29.01.2021 JP 2021013111
(71) Applicant: CONCEPT PROTO Inc., Tokyo 142-0051 (JP)
(72) Inventor: FUKAI, Zenroh, Tokyo 142-0051 (JP)
(74) Representative: Hoffmann Eitle
(86) International application number: PCT/JP2022/002922
(87) International publication number: WO 2022/163715

(57) **Abstract**

There is provided a technique generally applicable to sensor systems used in various fields. A program causes a computer to function as a receiving unit that receives, from each of a plurality of sensor devices, first information including sensor identification information for identifying the sensor device, sensor information based on detection by the sensor device, and timing information that indicates timing of the detection by the sensor device and a processing unit that generates second information based on the first information received from the plurality of sensor devices.

## Description

### Technical Field

The present invention relates to a program, an information processing method, and a terminal device.

### Background Art

There is conventionally known a technique for notifying another device of information detected by a sensor device and timing of the detection and performing processing. Patent Document 1 discloses a time measuring system including a plurality of time measuring devices on each of which a sensor unit is mounted. In this time measuring system, first, the time measuring devices are synchronized and then are disposed at a measurement start location and a measurement end location. These time measuring devices are connected via wireless communication or wire communication, and pass-through time or travel time of a mobile object is measured based on a detection signal obtained by each sensor unit.

### Citation List

### Patent Document

Patent Document 1: Japanese Patent No. 6550612

### Summary

### Technical Problem

There is a demand for a technique that is not limited to measuring time but is generally applicable to sensor systems used in various fields.

**An** object of the present invention is to provide a technique that is generally applicable to sensor systems used in various fields.

### Solution to Problem

A program according to an aspect of the present invention causes a computer to function as a receiving unit that receives, from each of a plurality of sensor devices, first information including sensor identification information for identifying the sensor device, sensor information based on detection by the sensor device, and timing information that indicates timing of the detection by the sensor device and a processing unit that generates second information based on the first information received from the plurality of sensor devices.

An information processing method according to an aspect of the present invention includes receiving, from each of a plurality of sensor devices, first information including sensor identification information for identifying the sensor device, sensor information based on detection by the sensor device, and timing information that indicates timing of the detection by the sensor device and generating second information based on the first information received from the plurality of sensor devices.

A terminal device according to an aspect of the present invention includes a receiving unit that receives, from each of a plurality of sensor devices, first information including sensor identification information for identifying the sensor device, sensor information based on detection by the sensor device, and timing information that indicates timing of the detection by the sensor device and a processing unit that generates second information based on the first information received from the plurality of sensor devices.

### Advantageous Effects of Invention

According to the present invention, a technique that is generally applicable to sensor systems used in various fields can be provided.

### Brief Description of Drawings

Fig. 1 illustrates an example of a configuration of a sensor system according to an embodiment.
Fig. 2 is a conceptual diagram illustrating an example of a hardware configuration of a terminal device according to the embodiment.
Fig. 3 is a conceptual diagram illustrating an example of a hardware configuration of a sensor device according to the embodiment.
Fig. 4 is a conceptual diagram illustrating an example of a usage mode of the sensor system according to the embodiment.
Fig. 5 illustrates an example of a processing flow of the sensor system according to the embodiment.
Fig. 6 is a conceptual diagram illustrating an example of the usage mode of the sensor system according to the embodiment.
Fig. 7 is a conceptual diagram illustrating an example of the usage mode of the sensor system according to the embodiment.

### Description of Embodiments

Hereinafter, an embodiment of the present invention will be described. The following embodiment is an example for describing the present invention and is not intended to limit the present invention to only the embodiment. The present invention can be modified in various ways without departing from the gist thereof.

### <System Configuration>

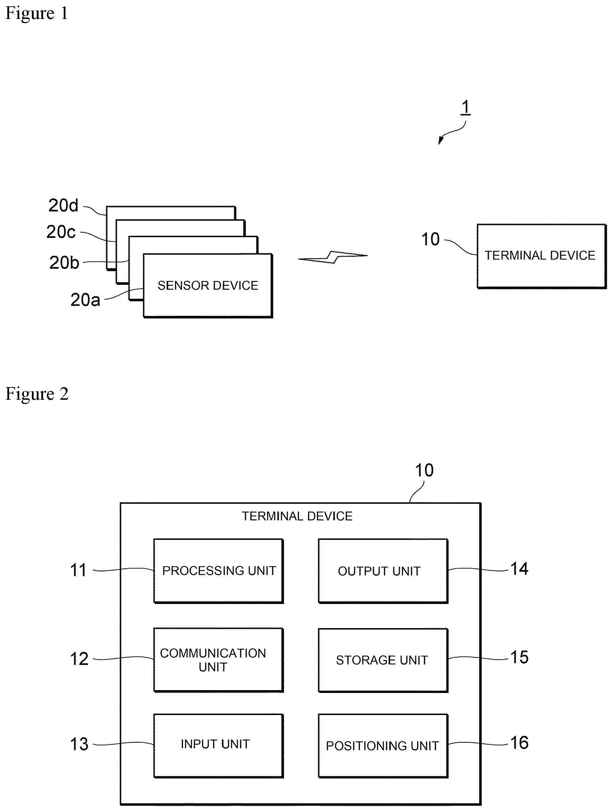

An exemplary configuration of a sensor system 1 according to an embodiment will be described with reference to Fig. 1. In the present embodiment, the sensor system 1 includes a terminal device 10 and sensor devices 20a, 20b, 20c, and 20d. In the example illustrated in Fig. 1, the sensor system 1 includes four sensor devices. However, the number of sensor systems may be set to any number, that is, three or less or five or more. The sensor devices 20a, 20b, 20c, and 20d may have the same configuration or may have different configurations. In the following description, when the sensor devices 20a, 20b, 20c, and 20d are referred to without being distinguished from each other, the sensor devices 20a, 20b, 20c, and 20d are collectively referred to as a sensor device 20.

In the sensor system 1, the terminal device 10 receives, from each of the plurality of sensor devices 20, information (hereinafter, also referred to as "notification information") including sensor identification information for identifying the sensor device 20, sensor information based on detection by the sensor device 20, and timing information indicating timing of the detection by the sensor device 20. The terminal device 10 performs processing based on the notification information received from each of the sensor devices 20 and generates other information (hereinafter, referred to as "generated information"). The generated information is information based on the notification information received from each of the plurality of sensor devices 20 and is information generated by performing arithmetic processing using the plurality of pieces of notification information, composition processing using the plurality of pieces of notification information, or the like. The processing in the sensor system 1 will be described in detail below.

**As** described above, according to the present embodiment, the terminal device 10 receives notification information including sensor identification information, sensor information, and timing information from each of the plurality of sensor devices 20 and generates generated information based on information included in the received notification information. As a result, a technique generally applicable to sensor systems used in various fields can be realized.

In the sensor system 1, the terminal device 10 and the sensor device 20 are configured to be able to communicate with each other. The communication between the terminal device 10 and the sensor device 20 is, for example, unidirectional communication from the sensor device 20 to the terminal device 10. However, the communication direction is not limited thereto, and the terminal device 10 and the sensor device 20 may be configured to be able to bidirectionally communicate with each other.

The terminal device 10 is, for example, a smartphone, a tablet terminal, a personal digital assistant (PDA), a personal computer, or another general-purpose or dedicated information processing apparatus.

**The** sensor device 20 is a device that detects some kind of event, such as a state, presence, or change of an object, or a state or change of an environment.

### <Hardware Configuration>

An example of a hardware configuration of the terminal device 10 will be described with reference to Fig. 2. The terminal device 10 includes a processing unit 11, a communication unit 12, an input unit 13, an output unit 14, a storage unit 15, and a positioning unit 16 as main components. In addition to the components illustrated in in Fig. 2, the terminal device 10 may include another component that is commonly included in a terminal device. The terminal device 10 may be configured without at least one of the components illustrated in Fig. 2.

The processing unit 11 controls various kinds of processing in the terminal device 10 by executing a program stored in the storage unit 15. The processing unit 11 realizes the various kinds of processing and functions in the terminal device 10 in cooperation with the components (hardware) included in the terminal device 10 and the program (software). The processing unit 11 is composed of, for example, a central processing unit (CPU).

The communication unit 12 performs wire or wireless communication with an external device of the terminal device 10 and is configured to receive notification information from the sensor device 20 via, for example, short-range unidirectional communication such as BLE (Bluetooth Low Energy (registered trademark)). Alternatively, the communication unit 12 may be configured to perform bidirectional communication or long-distance communication with the sensor device 20. In addition, the communication unit 12 is configured to be able to communicate with a device other than the sensor device 20 via a network such as the Internet (via a communication device such as a base station or a router).

The input unit 13 receives an input to the terminal device 10 and includes, for example, an operation unit, an audio input unit, and an image input unit. The operation unit includes, for example, a touch panel and button keys. The audio input unit includes, for example, a microphone. The image input unit includes, for example, a camera. The input unit 13 also includes an interface connector for inputting (and outputting) data from (and to) the outside.

The output unit 14 performs various kinds of output by the terminal device 10 and includes, for example, an image output unit and an audio output unit. The image output unit includes, for example, a display device. The audio output unit includes, for example, a speaker.

The storage unit 15 is a storage device or a memory that stores various kinds of information needed for processing and operations in the terminal device 10 and information about a processing result.

The positioning unit 16 specifies the location of the terminal device 10 and includes, for example, a global navigation satellite system (GNSS) module (GNSS receiver). The positioning unit 16 receives GNSS signals from a plurality of GNSS satellites and performs processing for positioning the terminal device 10 based on the received signals. A GNSS signal includes information about time at which the GNSS satellite has transmitted the GNSS signal.

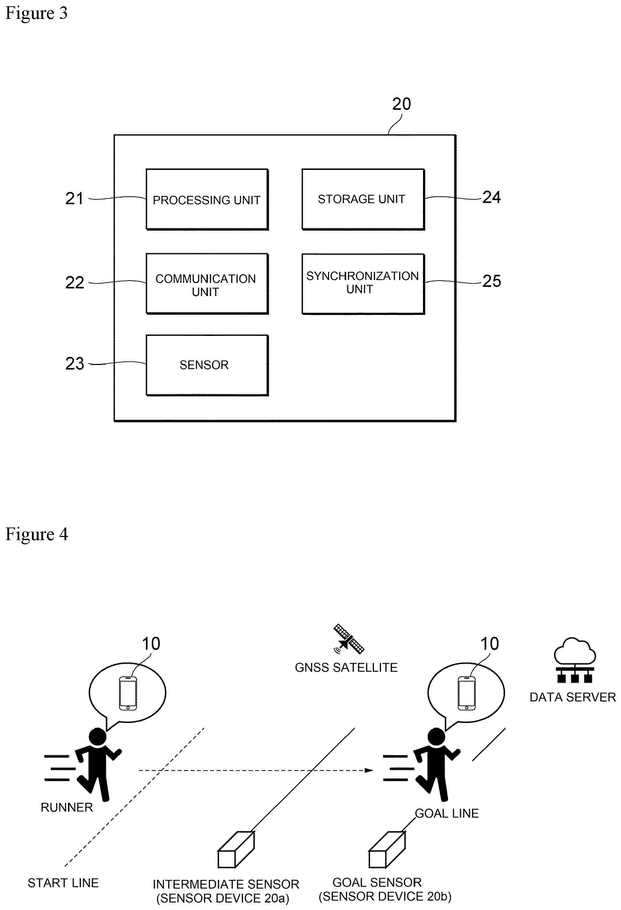

An example of a hardware configuration of the sensor device 20 will be described with reference to Fig. 3. The sensor device 20 includes a processing unit 21, a communication unit 22, a sensor 23, a storage unit 24, and a synchronization unit 25 as main components. A configuration including the processing unit 21, the communication unit 22, and the storage unit 24 functions as a measurement clock (time generation unit). The sensor device 20 may include a component other than the components illustrated in Fig. 3. The sensor device 20 may be configured without at least one of the components illustrated in Fig. 3.

The processing unit 21 controls various kinds of processing in the sensor device 20 by executing a program stored in the storage unit 24. The processing unit 21 realizes the various kinds of processing and functions in the sensor device 20 in cooperation with the components (hardware) included in the sensor device 20 and the program (software) stored in the storage unit 24. In addition, the processing unit 21 includes a transmission circuit that transmits a system clock. In one embodiment, the system clock (a clock signal) may be used to measure time or generate time information. The processing unit 21 may generate the time information so as to be synchronized with the time information included in the GNSS signal received by the positioning unit 16. The processing unit 21 is composed of, for example, a CPU.

The communication unit 22 performs communication with an external device of the sensor device 20 and is configured to transmit (broadcast) notification information to the terminal device 10 via, for example, short-range unidirectional communication such as BLE. Alternatively, the communication unit 22 may be configured to perform bidirectional communication or long-distance communication with the terminal device 10.

As described above, the notification information includes, for example, sensor identification information for identifying the sensor device 20, sensor information based on detection by the sensor device 20, and timing information indicating timing of the detection or the like by the sensor device 20. For example, the timing information includes some kind of information indicating timing such as time information about the time point of the above detection or the like.

The sensor information includes information based on some kind of event detected by the sensor device 20, such as a state, presence, or change of an object or a state or change of an environment. The sensor information may include information indicating that the sensor device 20 has detected (or sensed) an object. Examples of the information indicating that the object has been detected include information indicating that the sensor 23 has detected that the object has passed through a predetermined location or that the object is present at the predetermined location. In addition, the sensor information may include information indicating a physical quantity detected by the sensor 23. Examples of the information indicating the physical quantity include information about the physical quantity related to the object, such as movement or a shape change of the object. As another example, the information indicating the physical quantity includes information indicating an environmental state, such as temperature, atmospheric pressure, or water pressure.

The sensor 23 detects some kind of event such as a state, presence, or change of an object or a state or change of an environment and includes one or a plurality of sensors. Examples of the sensor 23 include a photoelectric sensor, a magnetic sensor, an acceleration sensor, an angular velocity sensor, a temperature sensor, and a pressure sensor (for example, an atmospheric pressure sensor and a water pressure sensor).

The storage unit 24 is a memory that stores various kinds of information needed for processing and operations in the sensor device 20 and information about a processing result.

The synchronization unit 25 synchronizes the time measured by the sensor device 20 with the time measured by another sensor device 20. The synchronization unit 25 includes, for example, a GNSS receiver. In this case, for example, the synchronization unit 25 receives a GNSS signal from the GNSS satellite and controls the time information generated in the sensor device 20 based on the time information included in the GNSS signal such that the time information generated in the sensor device 20 and the time information generated in the GNSS satellite are synchronized with each other. As a result, the sensor device 20 (for example, the sensor device 20a) can synchronize the time information generated therein with the time information generated in the other sensor device 20 (for example, the sensor device 20b, the sensor device 20c, or the sensor device 20d). According to the synchronization unit 25, timing information to be included in notification information can be generated based on the time information that has been synchronized among the plurality of sensor devices 20. That is, respective pieces of timing information included in the notification information that the terminal device 10 receives from the plurality of sensor devices 20 are based on temporally-synchronized information. In addition, when the terminal device 10 generates timing information based on the time information included in the GNSS signal received by the positioning unit 16, the sensor device 20 can also synchronize timing information generated therein with the timing information generated in the terminal device 10.

As a modification of the method for synchronizing the timing information, the synchronization unit 25 included in each of the plurality of sensor devices 20 may receive a signal including time information from an external device such as a terminal device (for example, a smartphone), a router, or a base station and may control timing information to be generated in the plurality of sensor devices 20 so as to be synchronized with the time information included in the received signal. As a result, the timing information can be synchronized between the plurality of sensor devices 20. In the present embodiment, the processing for synchronizing timing information, which will be described below, can adopt this modification.

Examples of the sensor system 1 will be described below. Each configuration illustrated in Figs. 1 to 3 will be referred to in the following description.

### <Example 1>

An example of processing performed by the sensor system 1 according to Example 1 will be described. In Example 1, the sensor system 1 functions as a time measuring system. For example, based on notification information received from a plurality of sensor devices 20, the terminal device 10 calculates travel time of an object in a predetermined section by the control of the processing unit 11.

Fig. 4 conceptually illustrates an example of a case in which the sensor system 1 is used to measure travel time of a runner in a short-distance running (or a mid-distance running or a long-distance running) in track and field. Fig. 4 illustrates a start line and a goal line of a short-distance running event. The runner holds a terminal device 10. A sensor device 20b is disposed at the goal line as a goal sensor for detecting (sensing) the goal of the runner. A sensor device 20a is disposed as an intermediate sensor at a halfway point between the start line and the goal line. In Example 1, respective pieces of timing information generated by the terminal device 10, the sensor device 20a, and the sensor device 20b are synchronized based on a signal received from a GNSS satellite.

In order to measure travel time of the runner who starts a run from the start line, first, the terminal device 10 outputs a signal for starting the run. For example, as the output of the signal, a voice saying "on your marks, set, "bang"" or the like may be output by the output unit 14 (audio output unit) of the terminal device 10 held by the runner at the start line. The terminal device 10 outputs and stores, in the terminal device 10, timing information (for example, time information) indicating the time at which the signal for starting the run has been output.

When the signal for starting the run has been output, the runner starts the run, and when the runner passes through the halfway point, the sensor device 20a detects that the runner has passed through the halfway point. When having detected that the runner has passed through the halfway point, the sensor device 20a transmits notification information including sensor identification information for identifying the sensor device 20a, sensor information (for example, flag information) indicating the detection of the runner passing through the halfway point, and timing information indicating the time at which the runner passing through the halfway point has been detected. Alternatively, the sensor information may indicate, as with the timing information, the time at which the runner passing through the halfway point has been detected. The terminal device 10 receives the notification information transmitted from the sensor device 20a.

Next, when the runner passes through the goal line, the sensor device 20a detects that the runner has passed through the goal line. When having detected that the runner has passed through the goal line, the sensor device 20b transmits notification information including sensor identification information for identifying the sensor device 20b, sensor information (for example, flag information) indicating that the runner passing through the goal line has been detected, and timing information indicating the time at which the runner passing through the goal line has been detected. The terminal device 10 receives the notification information transmitted from the sensor device 20b.

The terminal device 10 can calculate (measure) the time needed for the runner to travel the section from the start line to the halfway point based on the difference between the timing information indicating the time at which the signal for starting the run has been output and the timing information (time information) included in the notification information received from the sensor device 20a. In addition, the terminal device 10 can calculate the time needed for the runner to travel the section from the halfway point to the goal line based on the difference between the timing information (time information) included in the notification information received from the sensor device 20a and the timing information (time information) included in the notification information received from the sensor device 20b. Further, the terminal device 10 can calculate the time needed for the runner to travel the section from the start line to the goal line based on the difference between the timing information indicating the time at which the signal for starting the run has been output and the timing information included in the notification information received from the sensor device 20b.

The terminal device 10 may transmit the calculated (measured) travel time of the runner to a data server as generated information, and the data server may store the received travel time in a storage unit. In addition, the sensor system 1 may calculate the travel time of a plurality of runners by using a method similar to the above-described method. In this case, the data server may compile a ranking of the travel time of the plurality of runners stored in the storage unit and allow information about the ranking to be transmitted to the terminal device 10 in response to a request from the terminal device 10. The data server has a configuration of a common information processing apparatus and includes, for example, a processing unit (processor) and a storage unit. The data server has the same configuration in other examples.

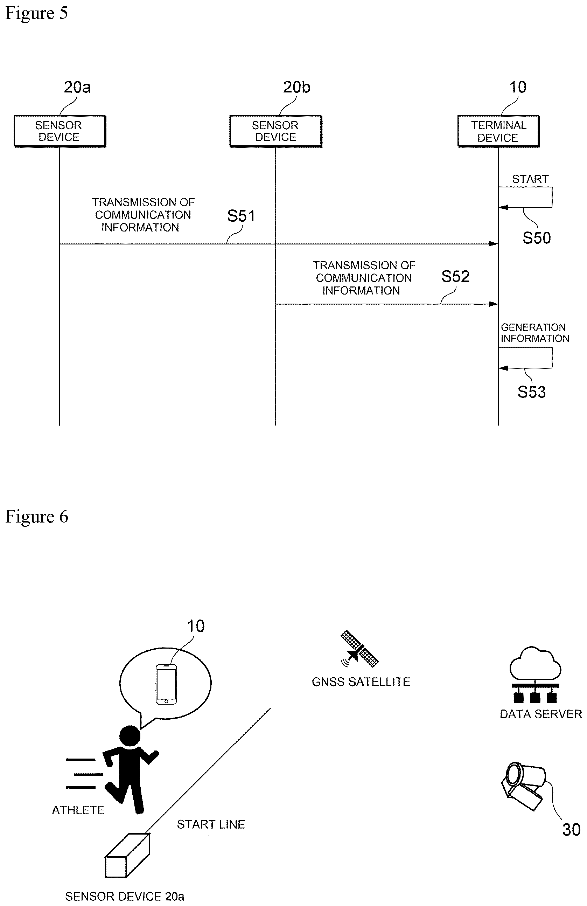

A processing flow of the sensor system 1 according to Example 1 will be described with reference to Fig. 5. Each processing step described below is realized by, for example, the processing units included in the terminal device 10 and the sensor device 20 reading and executing computer programs stored in the storage units.

In step S50, the terminal device 10 outputs a signal for starting a run at predetermined timing. For example, as described above, the output unit 14 (audio output unit) of the terminal device 10 may output a voice saying "on your marks, set, "bang"" or the like as the output of the signal. In addition, the processing unit 11 of the terminal device 10 outputs timing information indicating the time at which the signal for starting the run has been output as the timing information about the start of the run and stores the timing information in the storage unit 15. That is, the processing unit 11 functions as an output unit of the timing information.

In step S51, when the sensor device 20a detects that the runner has passed through the halfway point, the sensor device 20a transmits notification information including sensor identification information for identifying the sensor device 20a, sensor information (for example, flag information) indicating the detection of the runner passing through the halfway point, and timing information indicating the time at which the runner passing through the halfway point has been detected. Alternatively, the sensor information may indicate, as with the timing information, the time at which the runner passing through the halfway point has been detected. The terminal device 10 receives the notification information transmitted from the sensor device 20a.

As a method for detecting the passing through the halfway point, for example, when the runner crosses infrared light emitted from a photoelectric sensor included in the sensor 23 of the sensor device 20a, the sensor device 20a detects that the runner has passed through the halfway point.

Next, in step S52, when the sensor device 20b detects that the runner has passed through the goal line, the sensor device 20b transmits notification information including sensor identification information for identifying the sensor device 20b, sensor information indicating the detection of the runner passing through the halfway point, and timing information indicating the time at which the runner passing through the goal line has been detected. Alternatively, the sensor information may indicate, as with the timing information, the time at which the runner passing through the goal line has been detected. The terminal device 10 receives the notification information transmitted from the sensor device 20b.

Next, in step S53, the terminal device 10 calculates travel time of the runner in a predetermined section. For example, the details are as follows. The calculation of the travel time in the predetermined section is performed as describe below on the assumption that the sensor identification information about the sensor device 20a is stored in the terminal device 10 in association with information indicating the halfway point as information indicating that the sensor device 20a is disposed at the halfway point. In addition, the sensor identification information about the sensor device 20b is stored in the terminal device 10 in association with information indicating the goal line as information indicating that the sensor device 20b is disposed at the goal line.

Based on the difference between the time (start time) indicated by the timing information stored in the storage unit 15 in step S50 and the time (intermediate time) indicated by the timing information included in the notification information received in step S51, the terminal device 10 calculates time (travel time) needed for the runner to travel the section from the start line to the halfway point. In addition, based on the difference between the time (intermediate time) indicated by the timing information included in the notification information received in step S51 and the time (goal time) indicated by the timing information included in the notification information received in step S52, the terminal device 10 calculates time (travel time) needed for the runner to travel the section from the halfway point to the goal line. Further, based on the difference between the time (start time) indicated by the timing information stored in the storage unit 15 in step S50 and the time (goal time) indicated by the timing information included in the notification information received in step S52, the terminal device 10 calculates time (travel time) needed for the runner to travel the section from the start line to the goal line. The terminal device 10 stores the calculated travel time in the storage unit 15 as generated information and transmits the calculated travel time to the data server described above.

As described above, the terminal device 10 receives notification information including sensor identification information, sensor information, and timing information from each of the plurality of sensor devices 20 and generates generated information based on the information included in the received notification information. As a result, a technique generally applicable to sensor systems used in various fields, such as the time measurement system in Example 1 and sensor systems, which will be described in examples below, can be realized.

Since the time measurement is performed based on the timing information (for example, the time information) synchronized among the plurality of sensor devices 20 (and the terminal device 10), the terminal device 10 can calculate the travel time (generate generated information) with high accuracy based on the notification information received from the plurality of sensor devices 20 even if the real-time property of the communication is low.

When a configuration in which communication between the sensor device 20 and the terminal device 10 is unidirectional communication from the sensor device 20 to the terminal device 10 is adopted, the sensor device 20 can transmit information to the terminal device 10 without including, for example, a component needed for communication through the Internet (for example, a subscriber identity module card (SIM card)). As a result, the sensor system 1 can calculate travel time (generate generated information) with high accuracy by using a simple configuration that places low restrictions on the communication environment.

### <Modification of Example 1 >

In Example 1, the processing unit 11 of the terminal device 10 specifies (outputs) the timing information indicating the time at which the signal for starting the run has been output as the timing information about the start of the run and stores the timing information in the storage unit 15. The method for specifying and storing the timing information about the start of the run is not limited to the above method, and a different method may be used. For example, the following method may be used. First, a sensor device 20c is disposed at the start line as a start sensor and detects the start of the run of the runner. When having detected the start of the run of the runner, the sensor device 20c transmits notification information including sensor identification information for identifying the sensor device 20c, sensor information indicating the detection of the runner starting the run, and timing information indicating the time at which the runner starting the run has been detected. The terminal device 10 receives the notification information transmitted from the sensor device 20c and stores the notification information in the storage unit 15.

As a method for detecting the runner starting the run, for example, when the runner crosses infrared light emitted from a photoelectric sensor included in the sensor 23 of the sensor device 20c, the sensor device 20a may detect the start of the run of the runner.

The terminal device 10 may use the time (start time) indicated by the timing information included in the notification information received from the sensor device 20c and the time (intermediate time and goal time) indicated by the timing information included in the notification information received in steps S51 and S52 to calculate the travel time of the runner from the start line to the halfway point, the travel time from the halfway point to the goal line, and the travel time from the start line to the goal line by using a method similar to the above-described method.

### <Example 2>

An example of processing performed by the sensor system 1 according to Example 2 will be described. In Example 2, the sensor system 1 functions as a video system. For example, in the sensor system 1, a camera device having a configuration and functions similar to those of the terminal device 10 generates, by the control of the processing unit, information used for editing a moving image captured by the camera based on notification information received from the plurality of sensor devices 20.

Fig. 6 conceptually illustrates an example of a case in which the sensor system 1 is used as a video system for capturing a moving image by a camera or editing a captured moving image about some kind of competition such as a track event in track and field or a ski competition. Fig. 6 illustrates a sensor device 20a disposed at a predetermined location such as a start line and a camera device 30. Further, the terminal device 10 held by an athlete is illustrated. The camera device 30 has a configuration similar to that of the terminal device 10 (that is, the camera device 30 is capable of functioning similarly to the terminal device 10). The camera device 30 is disposed at a predetermined location, facing the athlete, so as to be able to capture the athlete. In Example 2, respective pieces of timing information generated by the terminal device 10, the sensor device 20a, and the camera device 30 are synchronized with each other based on signals received from the GNSS satellite.

The camera device 30 starts capturing a moving image prior to the start of the competition. The moving image data obtained by this image capturing is associated with timing information (for example, time information) about the image capturing. When the sensor device 20a detects that the athlete passes through the start line, the sensor device 20a transmits notification information including sensor identification information about the sensor device 20a, sensor information (for example, flag information) indicating the detection of the athlete passing through the start line, and timing information indicating the time at which the athlete passing through the start line has been detected. Alternatively, the sensor information may indicate, as with the timing information, the time at which the athlete passing through the start line has been detected. The camera device 30 receives the notification information transmitted from the sensor device 20a.

Although not illustrated, for example, a sensor device 20b may be disposed at the goal line. In this case, when the sensor device 20b detects that the athlete has passed through the goal line, the sensor device 20b may transmit notification information including sensor identification information about the sensor device 20b, sensor information (for example, flag information) indicating the detection of the athlete passing through the goal line, and timing information indicating the time at which the athlete passing through the goal line has been detected. The camera device 30 receives the notification information transmitted from the sensor device 20b. In the present example, the camera device 30 may receive the notification information via a relay device configured by any communication device, instead of directly receiving the notification information from the sensor device 20.

**The** camera device 30 cuts out (trims) the moving image data at a position determined based on the time (competition start time) indicated by the timing information included in the notification information received from the sensor device 20a and the time (competition finish time) indicated by the timing information included in the notification information received from the sensor device 20b. That is, based on the notification information received from the plurality of sensor devices 20, the camera device 30 generates, as generated information, cutout position information to be used for editing the moving image data obtained by image capturing by the camera device 30. For example, the captured moving image data may be cut out by setting a position corresponding to a predetermined time before (for example, two seconds before) the competition start time as a start position of the cutout and setting a position corresponding to a predetermined time after (for example, two seconds after) the competition finish time as an end position of the cutout. The camera device 30 stores the moving image data obtained by the above cutout processing in a storage unit of the camera device 30 and transmits the moving image data to the data server. The moving image data may be transmitted from the camera device 30 to the data server via the terminal device 10. The data server stores the received moving image data in the storage unit of the data server. The athlete (user) can receive the moving image data from the camera device 30 or the data server via the terminal device 10 and reproduce and view the moving image data.

**The** cutout moving image data of each of a plurality of athletes may be obtained by a method similar to the above-described method and stored in the camera device 30 or the data server. In this case, since the plurality of pieces of moving image data stored in the camera device 30 or the data server start from the same predetermined position (for example, two seconds before the competition start time), the user can easily compare subjects captured in respective moving image data (compare the performances of the plurality of athletes) by simultaneously reproducing the plurality of pieces of moving image data. For example, the user may download or stream the plurality of pieces of moving image data from the data server or the like and use the terminal device 10 or another device to combine and reproduce the plurality of pieces of moving image data from the predetermined position (for example, two seconds before the competition start time) so that the performances of the plurality of athletes can be analyzed. For example, in a case of a track and field event, the analysis includes identification of a portion where a difference between the athletes can be recognized, such as a comparison between the athletes on the reaction time to a start sound.

The sensor system 1 functioning as the video system in Example 2 can be used not only for the above-described track event in track and field or ski competition but also for capturing a moving image or editing and analyzing a captured moving image of a performance-type event (for example, gymnastics such as a vaulting box, one make race, or aerial), a jump-type event (for example, the long jump, triple jump, high jump, or pole jump), or golf.

### <Modification of Example 2>

Although the camera device 30 receives the notification information transmitted from the sensor device 20 and generates the generated information in the above description of Example 2, the present invention is not limited thereto. The terminal device 10 may receive the notification information from the sensor device 20 and generate generated information based on the received notification information. In this case, terminal device 10 receives, from the camera device 30, notification information including sensor identification information about the camera device 30, sensor information including the moving image data obtained by image capturing by camera device 30, and timing information indicating the time of the image capturing associated with this moving image data. Based on the notification information received from the sensor device 20 and the notification information received from the camera device 30, the terminal device 10 may determine the cutout position (generated information) of the moving image data and generate the cutout moving image data (generated information) by using a method similar to the above-described method.

### <Example 3>

In Example 3, the sensor system 1 functions as an analysis system for analyzing a form of an athlete. For example, based on the sensor identification information and the timing information included in the plurality of respective pieces of notification information received from the plurality of sensor devices 20, the terminal device 10 combines the sensor information included in the plurality of pieces of notification information by the control of the processing unit 11. Furthermore, by analyzing the generated information obtained by combining the sensor information based on the control of the processing unit 11, the terminal device 10 can estimate the motion form of an athlete and output the data of the motion form obtained as the estimation result (for example, as moving image data).

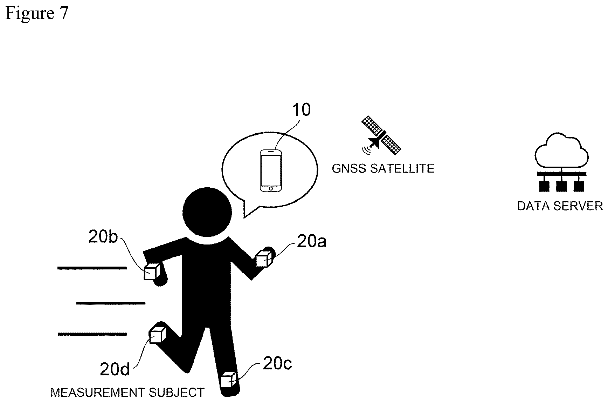

Fig. 7 conceptually illustrates an example of a case in which the sensor system 1 is used as a form analysis system for analyzing the form of a running athlete. Fig. 7 illustrates a terminal device 10 held by a measurement subject who is an athlete (runner). Fig. 7 also illustrates sensor devices 20a, 20b, 20c, and 20d attached to four limbs (the left wrist, right wrist, left ankle, and right ankle) of the measurement subject. The sensor device 20 may be attached to at least one of the four limbs, not all the four limbs. The sensor device 20 may be attached to a part of the body (for example, the head or waist) of the measurement subject, other than the four limbs.

The terminal device 10 stores information indicating the positions at which the sensor devices 20 are attached. For example, sensor identification information for identifying the sensor devices 20a, 20b, 20c, and 20d is stored in association with information indicating the left wrist, right wrist, left ankle, or right ankle.

In Example 3, respective pieces of timing information generated by the terminal device 10 and the sensor devices 20a, 20b, 20c, and 20d are synchronized with each other based on signals received from the GNSS satellite.

Notification information is transmitted from each of the sensor devices 20a, 20b, 20c, and 20d while the measurement subject is running, and the terminal device 10 receives the notification information. The notification information includes sensor identification information for identifying the sensor device 20, sensor information based on detection by the sensor device 20, and timing information indicating time of the detection by the sensor device 20. The sensor information includes, for example, information about a detection result (measurement result) by an acceleration sensor and an angular velocity sensor included in the sensor 23 of the sensor device 20.

Based on the sensor identification information and the timing information included in the plurality of respective pieces of notification information received from the sensor devices 20a, 20b, 20c, and 20d, the terminal device 10 combines the sensor information included in the plurality of pieces of notification information. Specifically, assuming that the sensor information associated with the sensor identification information about the sensor device 20a is the measurement result of the left wrist, the sensor information associated with the sensor identification information about the sensor device 20b is the measurement result of the right wrist, the sensor information associated with the sensor identification information about the sensor device 20c is the measurement result of the left ankle, and the sensor information associated with the sensor identification information about the sensor device 20d is the measurement result of the right anklet, the terminal device 10 combines the sensor information such that the times indicated by the timing information associated with respective pieces of sensor information correspond to each other.

The terminal device 10 estimates the motion form of the measurement subject by analyzing information (generated information) obtained by combining the sensor information and outputs the data of the motion form obtained as the estimation result (for example, as moving image data) by the output unit 14. Specifically, the terminal device 10 stores in advance, in the storage unit 15, data (basic data) in which measurement data obtained by the sensor 23 and data indicating the motion form (including positions and movements of parts of a human body such as four limbs) of the athlete are associated with each other. The terminal device 10 may estimate the motion form of the measurement subject based on the basic data and the generated information and output the data of the motion form obtained as the estimation result. As a modification, by associating the basic data with physical information (including height, weight, and the like), it is possible to output motion form data obtained as an estimation result with higher accuracy based on the basic data, the generated information, and the physical information about the measurement subject.

The motion form data obtained as the estimation result can be reproduced by the terminal device 10 as moving image data representing the motion form (for example, moving image data representing a shape of a human body and movement of a part of the body such as four limbs). In addition, the motion form data obtained as the estimation result may be transmitted to the data server and stored in the storage unit of the data server together with the data of other measurement subjects.

The terminal device 10 can download the motion form data from the data server and reproduce the downloaded motion form data. The terminal device 10 may be able to reproduce the motion form data of a plurality of measurement subjects (including, for example, motion form data serving as a sample) in comparable mode (including, for example, reproduction of a plurality of moving image data arranged side by side or in an overlapping manner).

As described above, according to Example 3, the motion form of the measurement subject can be analyzed without performing image analysis processing.

The program for implementing the sensor system 1 (or the terminal device 10, the sensor device 20, or the camera device 30) according to the present embodiment can be recorded in various recording media such as an optical disk, a magnetic disk, and a semiconductor memory. In addition, the above program can be installed or loaded into the computer by downloading the program through a recording medium or via a communication network.

The present invention is not limited to the embodiment described above and can be implemented in various other forms without departing from the scope of the present invention. The above embodiment is merely an example in all respects and is not to be construed as limiting.

### Reference Signs List

- 1: Sensor system
- 10: Terminal device
- 20: Sensor device
- 30: Camera device

## Claims

1. A program for causing a computer to function as:
a receiving unit that receives, from each of a plurality of sensor devices, first information including sensor identification information for identifying the sensor device, sensor information based on detection by the sensor device, and timing information that indicates timing of the detection by the sensor device; and
a processing unit that generates second information based on the first information received from the plurality of sensor devices.

2. The program according to claim 1, wherein the sensor information includes information indicating that the sensor device has detected an object.

3. The program according to claim 1 or 2, wherein the sensor information includes information indicating a physical quantity detected by the sensor device.

4. The program according to any one of claims 1 to 3, wherein respective pieces of the timing information included in the first information received from the plurality of sensor devices is based on temporally-synchronized information.

5. The program according to any one of claims 1 to 4, wherein the processing unit calculates travel time of an object in a predetermined section based on the first information received from the plurality of sensor devices.

6. The program according to claim 5, wherein
the program causes the computer to further function as an output unit that outputs timing information, and
the processing unit further calculates the travel time based on timing information output by the output unit.

7. The program according to any one of claims 1 to 6, wherein the processing unit generates information used for editing a moving image captured by a camera based on the first information received from the plurality of sensor devices.

8. The program according to any one of claims 1 to 7, wherein the processing unit combines the sensor information included in respective pieces of the first information received from the plurality of sensor devices based on the sensor identification information and the timing information.

9. The program according to any one of claims 1 to 8, wherein the receiving unit receives the first information from each of the plurality of sensor devices via unidirectional communication.

10. An information processing method comprising:
receiving, from each of a plurality of sensor devices, first information including sensor identification information for identifying the sensor device, sensor information based on detection by the sensor device, and timing information that indicates timing of the detection by the sensor device; and
generating second information based on the first information received from the plurality of sensor devices.

11. A terminal device comprising:
a receiving unit that receives, from each of a plurality of sensor devices, first information including sensor identification information for identifying the sensor device, sensor information based on detection by the sensor device, and timing information that indicates timing of the detection by the sensor device; and
a processing unit that generates second information based on the first information received from the plurality of sensor devices.
